# EUROPEAN PATENT APPLICATION

(11) **EP 4 741 957 A2**
(43) Date of publication of application: **13.05.2026**
(21) Application number: 25210444.3
(22) Date of filing: 22.10.2025
(51) Int. Cl.: G05B 19/042, G05B 9/03, G06F 11/16

(54) **SAFETY-TYPE CONTROLLER APPLICABLE TO ENGINEERING MACHINERY, CONTROL METHOD, AND ENGINEERING MACHINE**

(30) Priority: 12.11.2024 CN 202411614445
(71) Applicant: Jiangsu Advanced Construction Machinery Innovation Center Ltd., Xuzhou, Jiangsu 221004 (CN)
(72) Inventor: ZHANG, Chen, Xuzhou, Jiangsu, 221004 (CN); GAO, Can, Xuzhou, Jiangsu, 221004 (CN); LIU, Yang, Xuzhou, Jiangsu, 221004 (CN)
(74) Representative: Proi World Intellectual Property GmbH

(57) **Abstract**

This application discloses a safety-type controller applicable to engineering machinery, a control method, and an engineering machine in the engineering machinery field. The safety-type controller includes a multi-core processor including first, second and third processing cores. The first processing core is configured to run a BootLoader program. The second processing core is configured to run an application program to input or output a safety-related signal and read or write a safety-related or non-safety-related memory. The third processing core is configured to run an application program to input or output a non-safety-related signal, read or write a non-safety-related memory, and read a safety-related memory. The BootLoader program, the functional safety-related application program, and the non-functional-safety-related application program are run by separate cores in an isolated manner, thereby ensuring operating efficiency while improving safety.

## Description

### TECHNICAL FIELD

This application relates to the technical field of engineering machinery, and in particular, to a safety-type controller applicable to engineering machinery, a control method, and an engineering machine.

### BACKGROUND

A controller is an apparatus for controlling or regulating mechanical, electrical, or other systems, and is typically implemented using technologies such as a smart chip, program control, or a sensor. Controllers are widely used in the fields such as engineering machinery, household appliances, and automotive electronics, and are an indispensable part of modern production and life. Controllers are categorized into combinational logic controllers and microprogrammed controllers. Each type of the controllers exhibit their respective advantages and disadvantages. A combinational logic controller is characterized by a simple design structure, fast execution, and high reliability. However, once the design is finalized, a combinational logic controller is not modifiable or expansible. A microprogrammed controller allows easy modification of control logic, and can be modified by just modifying the program of the controller. However, the reliability of the microprogrammed controller is considerably affected by the quality of the program code and the circuit design of the controller, making the controller prone to reliability problems.

Currently, a controller is used as a core controller unit of a main machine in the field of engineering machinery, such as for excavators, loaders, cranes, and aerial work platforms. As the functions of the main machine become more complex and new demands arise frequently, microprogrammed controllers are universally used for developing a control system of the main machine in the engineering machinery field. An engineering main machine operates in environments that require high safety and reliability. A conventional controller uses a single channel to acquire and execute controller signals, lacking feedback signal monitoring for an execution channel, thereby being prone to cause controller failure. Once a failure occurs, protective handling and execution functionality are lacking. Therefore, it is essential to develop a safety-type controller and system applicable to engineering machinery.

### SUMMARY

An objective of this application is to provide a safety-type controller applicable to engineering machinery, a control method, and an engineering machine to overcome disadvantages in the prior art and solve the problem that conventional controllers are unable to meet the safety and reliability requirements of an operating environment of an engineering main machine.

To achieve the above objective, this application puts forward the following technical solutions:
According to a first aspect, this application provides a safety-type controller applicable to engineering machinery. The controller includes a multi-core processor. The multi-core processor includes a first processing core, a second processing core, and a third processing core. The first processing core is configured to run a BootLoader program. The second processing core is configured to run an application program to input or output a safety-related signal and read or write a safety-related or non-safety-related memory. The third processing core is configured to run an application program to input or output a non-safety-related signal, read or write a non-safety-related memory, and read a safety-related memory.

Optionally, the multi-core processor adopts a multi-core MCU chip.

Optionally, the second processing core acquires a dual-signal result from each same signal source by using a dual-signal acquisition channel, performs error check on the dual-signal result, and determines, in the case that an error falls within a preset error range, that the signal acquisition is successful.

Optionally, in the case that the error falls outside the preset error range, the second processing core determines that the signal acquisition fails, and cuts off an output signal of the second processing core directed to the signal source or cuts off all output signals of the second processing core.

Optionally, the output signal of the second processing core reaches a controlled device through a load driver module. The load driver module includes a main switch, a group switch, and a sub-switch group. An input terminal of the main switch is externally connected to a power source. An output terminal of the main switch is connected to an input terminal of each group switch. An output terminal of the group switch is connected to one load through one sub-switch group. The output signal of the second processing core is connected to control terminals of the main switch, the group switch, and the sub-switch group.

Optionally, the third processing core acquires a single-signal result from each same signal source by using a single-signal acquisition channel.

Optionally, a watchdog circuit and a bus communication circuit are further connected to the multi-core processor.

According to a second aspect, this application provides a control method of a safety-type controller applicable to engineering machinery. The controller is the safety-type controller disclosed above, and the control method includes:
entering, by the safety-type controller, the BootLoader program in response to the safety-type controller being powered on, and running, by the first processing core, the BootLoader program, and determining whether a program update is required;
entering the application program in the case that no program update is required;
running, by the second processing core, the application program to input or output the safety-related signal and read or write the safety-related or non-safety-related memory; and
running, by the third processing core, the application program to input or output the non-safety-related signal, read or write the non-safety-related memory, and read the safety-related memory.

Optionally, the control method further includes: entering the application program after completion of the program update in the case that the program update is required.

According to a third aspect, this application provides an engineering machine. The engineering machine includes the safety-type controller disclosed above.

Compared with the prior art, this application achieves at least the following beneficial effects:
In the safety-type controller applicable to engineering machinery, the control method, and the engineering machine provided herein, the BootLoader program, the functional safety-related application program, and the non-functional-safety-related application program are run by separate cores in an isolated manner based on the multi-core processor in the safety-type controller, thereby ensuring operating efficiency while improving safety. In addition, the processing core of the functional-safety-related application program is designed with dual-channel redundant inputs and multi-level outputs, thereby balancing safety and flexibility.

### BRIEF DESCRIPTION OF DRAWINGS

FIG. 1 is a schematic structural diagram of a safety-type controller applicable to engineering machinery according to an embodiment of this application;
FIG. 2 is a schematic diagram of an input signal redundancy design of a second processing core according to an embodiment of this application; and
FIG. 3 is a schematic diagram of an output signal multi-stage control of a second processing core according to an embodiment of this application.

### DETAILED DESCRIPTION

The following describes this application in further detail with reference to accompanying drawings. The following embodiments are merely intended to describe the technical solutions of this application more clearly, but not intended to limit the protection scope of this application.

### Embodiment 1

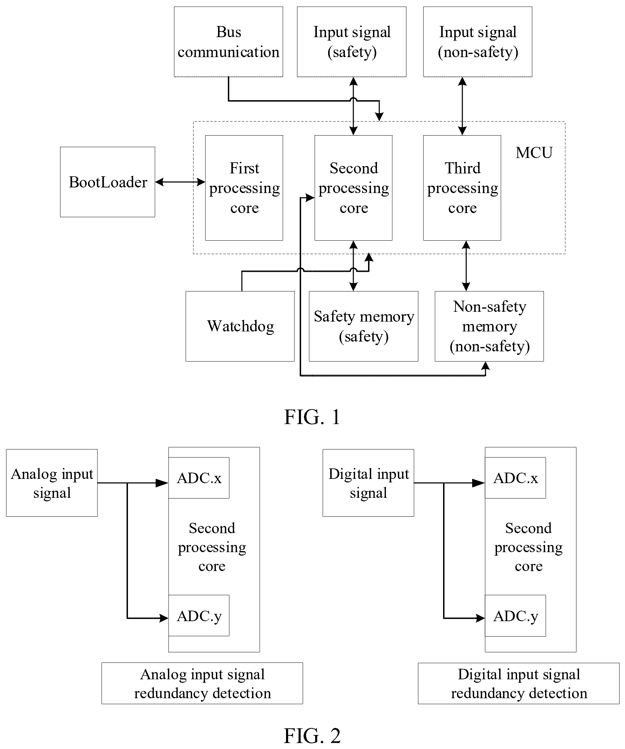

As shown in FIG. 1, an embodiment of this application provides a safety-type controller applicable to engineering machinery. The controller includes a multi-core processor. The multi-core processor includes a first processing core, a second processing core, and a third processing core. The first processing core is configured to run a BootLoader program. The second processing core is configured to run an application program to input or output a safety-related signal and read or write a safety-related or non-safety-related memory. The third processing core is configured to run an application program to input or output a non-safety-related signal, read or write a non-safety-related memory, and read a safety-related memory. In this embodiment, the BootLoader program, the functional safety-related application program, and the non-functional-safety-related application program are run by separate cores in an isolated manner based on the multi-core processor, thereby ensuring operating efficiency while improving safety.

Specifically, in this embodiment, the multi-core processor adopts a multi-core MCU chip. In other optional embodiments, other multi-core processors may be adopted instead.

As shown in FIG. 2, in order to improve the safety of the safety-related signal processing, a dual-channel redundant design is adopted for the input of the second processing core. The second processing core acquires a dual-signal result from each same signal source by using a dual-signal acquisition channel, and performs error check on the dual-signal result, and determines, if the error falls within a preset error range, that the signal acquisition is successful, or determines, if the error falls outside the preset error range, that the signal acquisition fails and cuts off the output signal of the second processing core directed to the signal source or cuts off all output signals of the second processing core.

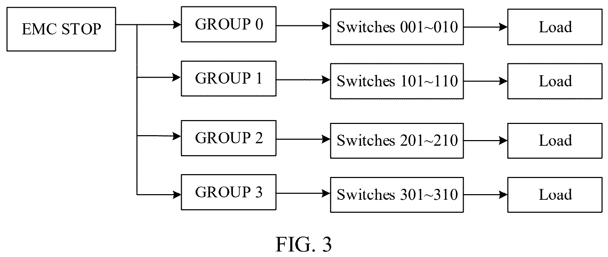

As shown in FIG. 3, the output signal of the second processing core reaches a controlled device through a load driver module. The load driver module includes a main switch, a group switch, and a sub-switch group. An input terminal of the main switch is externally connected to a power source. An output terminal of the main switch is connected to an input terminal of each group switch. An output terminal of the group switch is connected to one load through one sub-switch group. The output signal of the second processing core is connected to control terminals of the main switch, the group switch, and the sub-switch group. In this embodiment, the main switch is denoted as EMC STOP, the number of group switches is 4, denoted as GROUP0, GROUP1, GROUP2, and GROUP3, respectively, and the number of sub-switch groups is 4. Each sub-switch group includes 10 sub-switches, and controls 10 output channels, thereby implementing multi-stage control at the main, group, and sub levels.

Depending on the error level or other fault levels, severe-fault control may be set to cut off the main switch, general-fault control may be set to cut off the corresponding group switch, and minor-fault control may be set to cut off the corresponding sub-switch.

The third processing core acquires a single-signal result from each same signal source by using a single-signal acquisition channel, thereby effectively reducing the usage cost while ensuring control functions.

A watchdog circuit and a bus communication circuit are further connected to the multi-core processor to implement conventional monitoring and communication functions.

### Embodiment 2

Based on the safety-type controller provided in Embodiment 1, this embodiment of this application provides a control method of a safety-type controller applicable to engineering machinery. The control method includes:
entering, by the safety-type controller, the BootLoader program in response to the safety-type controller being powered on, and running, by the first processing core, the BootLoader program, and determining whether a program update is required;
entering the application program after completion of the program update in the case that the program update is required;
entering the application program in the case that no program update is required;
running, by the second processing core, the application program to input or output the safety-related signal and read or write the safety-related or non-safety-related memory; and
running, by the third processing core, the application program to input or output the non-safety-related signal, read or write the non-safety-related memory, and read the safety-related memory.

### Embodiment 3

This embodiment of this application provides an engineering machine. The engineering machine includes the safety-type controller provided in Embodiment 1.

Persons skilled in the art should understand that the embodiments of this application may be provided as a method, a system, or a computer program product. Therefore, this application may be implemented in the form of a complete hardware embodiment, a complete software embodiment, or a combination of software and hardware embodiments. In addition, this application may be implemented in the form of a computer program product on one or more computer-operable storage media (including, but not limited to, a disk memory, a CD-ROM, an optical memory, or the like) containing computer-executable program code.

This application is described with reference to a flowchart and/or a block diagram of a method, a device (system), and a computer program product according to the embodiments of this application. Understandably, computer program instructions may implement each procedure and/or block in the flowchart and/or the block diagram, or a combination of procedures and/or blocks in the flowchart and/or the block diagram. The computer program instructions may be provided for a universal computer, a dedicated computer, an embedded processor, or a processor of other programmable data processing devices to bring forth a machine, so that the instructions executed by the computer or the processor of other programmable data processing devices bring forth an apparatus that is configured to implement functions specified in one or more processes in a flowchart and/or one or more blocks in a block diagram.

Alternatively, the computer program instructions may be stored in a computer-readable memory capable of inducing the computer or other programmable data processing devices to work in a specific way, so that the instructions stored in the computer-readable memory bring forth a manufactured product that includes an instruction device. The instruction device implements the functions specified in one or more processes in a flowchart and/or one or more blocks in a block diagram.

Alternatively, the computer program instructions may be loaded onto a computer or other programmable data processing devices, so as to perform a series of operation steps on the computer or other programmable devices to actuate computerized processing. In this way, the instructions executed on the computer or other programmable devices give rise to the steps that are used to implement the functions specified in one or more processes in a flowchart and/or one or more blocks in a block diagram.

The foregoing descriptions are merely preferred embodiments of this application. It is noted that various improvements and variations, which may be made by a person of ordinary skill in the art without departing from the technical principles of this application, shall still fall within the protection scope of this application.

## Claims

1. A safety-type controller applicable to engineering machinery, **characterized in that** the controller comprises a multi-core processor; the multi-core processor comprises a first processing core, a second processing core, and a third processing core; the first processing core is configured to run a BootLoader program; the second processing core is configured to run an application program to input or output a safety-related signal and read or write a safety-related or non-safety-related memory; and the third processing core is configured to run an application program to input or output a non-safety-related signal, read or write a non-safety-related memory, and read a safety-related memory.

2. The safety-type controller applicable to engineering machinery according to claim 1, **characterized in that** the multi-core processor adopts a multi-core MCU chip.

3. The safety-type controller applicable to engineering machinery according to claim 1, **characterized in that** the second processing core acquires a dual-signal result from each same signal source by using a dual-signal acquisition channel, performs error check on the dual-signal result, and determines, in the case that an error falls within a preset error range, that the signal acquisition is successful.

4. The safety-type controller applicable to engineering machinery according to claim 3, **characterized in that**
in the case that the error falls outside the preset error range, the second processing core determines that the signal acquisition fails, and cuts off an output signal of the second processing core directed to the signal source or cuts off all output signals of the second processing core.

5. The safety-type controller applicable to engineering machinery according to claim 1, **characterized in that** the output signal of the second processing core reaches a controlled device through a load driver module; the load driver module comprises a main switch, a group switch, and a sub-switch group; an input terminal of the main switch is externally connected to a power source; an output terminal of the main switch is connected to an input terminal of each group switch; an output terminal of the group switch is connected to one load through one sub-switch group; and the output signal of the second processing core is connected to control terminals of the main switch, the group switch, and the sub-switch group.

6. The safety-type controller applicable to engineering machinery according to claim 1, **characterized in that** the third processing core acquires a single-signal result from each same signal source by using a single-signal acquisition channel.

7. The safety-type controller applicable to engineering machinery according to claim 1, **characterized in that** a watchdog circuit and a bus communication circuit are further connected to the multi-core processor.

8. A control method of a safety-type controller applicable to engineering machinery, **characterized in that** the controller is the safety-type controller according to any one of claims 1 to 7, and the control method comprises:
entering, by the safety-type controller, the BootLoader program in response to the safety-type controller being powered on, and running, by the first processing core, the BootLoader program, and determining whether a program update is required;
entering the application program in the case that no program update is required;
running, by the second processing core, the application program to input or output the safety-related signal and read or write the safety-related or non-safety-related memory; and
running, by the third processing core, the application program to input or output the non-safety-related signal, read or write the non-safety-related memory, and read the safety-related memory.

9. The control method of a safety-type controller applicable to engineering machinery according to claim 8, further comprising: entering the application program after completion of the program update in the case that the program update is required.

10. An engineering machine, **characterized in that** the engineering machine comprises the safety-type controller according to any one of claims 1 to 7.
